# EUROPEAN PATENT SPECIFICATION

(11) **EP 4 125 194 B1**
(45) Date of publication and mention of the grant of the patent: **02.09.2026**
(21) Application number: 21188165.1
(22) Date of filing: 28.07.2021
(51) Int. Cl.: H02K 41/03

(54) **MOVABLE PART OF A LINEAR MOTOR COMPRISING A CARRIAGE INTERFACE MEMBER**
BEWEGLICHER TEIL EINES LINEARMOTORS MIT EINEM SCHLITTENSCHNITTSTELLENELEMENT
PIÈCE MOBILE D'UN MOTEUR LINÉAIRE COMPRENANT UN ÉLÉMENT D'INTERFACE DE CHARIOT

(43) Date of publication of application: 01.02.2023
(73) Proprietor: ETEL S.A., 2112 Môtiers (CH)
(72) Inventor: Tamigniaux, Philippe, 25500 Morteau (FR); Droval, Yannick, 2000 Neuchâtel (CH)
(74) Representative: P&TS SA (AG, Ltd.)

(56) References cited:
- EP-A1- 2 975 746
- WO-A2-98/50760
- JP-A- S61 147 768
- US-A1- 2013 313 920

## Description

### Field of the invention

The present invention relates to a movable part of a linear motor, comprising a carriage, a primary part of the linear motor and a carriage interface member for removably connecting the carriage to the primary part. The invention also relates to a linear motor comprising such movable part.

### Background of the invention

Linear motors may be used for rapid positioning of objects such as a machine part of a machine tool. Linear motors comprise a primary part or movable part and a secondary part or stationary part. A carriage adapted to carry the machine part is connected to the primary part. The secondary part typically includes a magnetic track comprising permanent magnets fixed between linear guides to enable a magnetic reciprocated action between the primary and secondary parts to move the carriage along the linear guides. A conventional linear motor is disclosed for example in US8030804B2.

In known linear motors, the primary part is usually connected to the bottom side of the carriage by means of screws passing through the carriage from its top side to its bottom side. In customary applications, the machine part to be moved is fixed to the top side of the carriage. It is therefore necessary to remove first the machine part from the top side to access the linear motor for replacement or maintenance purposes which often imply a complex and tedious disassembling procedure.

US11025152B2 discloses an interface apparatus for a linear motor to overcome the above problem. The interface apparatus comprises however many parts, including in particular wedges which require tight mechanical tolerances, which are costly to manufacture. Moreover, the wedges induce significant internal stresses in the carriage which should be avoided for front-end high-performance applications.

WO98/50760 discloses a modular conveyer system comprising multiple moving elements under independent control.

EP2975746A1 discloses a linear motor comprising a stator and a movable element in a linear direction relative to the stator.

An aim of the present invention is to provide a movable part of a linear motor, comprising a carriage, a primary part of the linear motor and a carriage interface member for removably connecting the carriage to the primary part, the carriage interface member being designed to reduce mechanical deformations thereby increasing the positioning repeatability of an object to be moved.

Another aim of the present invention is to provide a carriage interface member which is cost-effective to manufacture.

A further aim of the present invention is to provide a lightweight carriage interface member.

### Brief summary of the invention

These aims are achieved by a movable part of a linear motor comprising a primary part movable relative to a secondary part. The movable part comprises a carriage, the primary part and a carriage interface member for removably connecting the carriage to the primary part. The carriage is configured to fixedly support an object to be moved, such as a machine part of a machine tool. The carriage comprises two opposite lateral sides and a bottom side having a carriage interface member receiving portion comprising anchoring receiving parts. The carriage interface member is fixedly connected to the primary part and comprises anchoring portions connected to respective anchoring receiving parts of the carriage. Two opposite edge portions of the carriage interface member are aligned and fixedly connected to a portion of respective opposite lateral sides of the carriage. The anchoring portions extend perpendicularly across the carriage interface member from one longitudinal side to the opposite longitudinal side of said member in a direction that is also perpendicular to the travel direction of the carriage in a direction that is also perpendicular to the travel direction of the carriage.

In an embodiment, one edge portion of the carriage interface member comprises carriage fixation threaded holes aligned with through-holes provided on one lateral side portion of the carriage. Said one edge portion is fixed to said one lateral side portion by screws.

In an embodiment, the opposite edge portion of the carriage interface member comprises a tapered surface. Screws are screwed into threaded holes provided on the opposite lateral side portion of the carriage such that a distal end of the screws abuts against the tapered surface to produce a force on said carriage interface member which is perpendicular to the axes of the threaded holes.

In an embodiment, the carriage interface member comprises a top side having raised anchoring portions and a flat bottom side. The anchoring portions comprises raised central portions having each a flat surface and primary part fixation holes extending from the flat surface to the bottom side, and two raised edge portions located on two opposite edges of the carriage interface member.

In an embodiment, each of the anchoring receiving parts of the interface member receiving portion of the carriage comprises a bearing surface. Each of the anchoring portions of the carriage interface member comprises a resting surface resting on respective bearing surface.

In an embodiment, each of at least two anchoring portions comprises a recess extending from one lateral side of the anchoring portion towards an opposite lateral side of the anchoring portion to form the resting surface.

In an embodiment, one lateral side portion of the carriage is flanked by two portions to form a cut-out portion. A reinforcing piece is removably fixed inside the cut-out portion by means of fixation means extending through the thickness of the reinforcing piece. A distal end of the fixation means is connected to said one lateral side portion.

In an embodiment, the carriage interface member is in the form of a rectangular plate and comprises a stiffener in the form of a ridge extending in the middle of said rectangular plate along a longitudinal direction between the anchoring portions.

Another aspect of the invention relates to a linear motor comprising the movable part as described above.

### Brief description of the drawings

The invention will be better understood with the aid of the description of several embodiments given by way of examples and illustrated by the figures, in which:
- Figure 1 shows an exploded view of the movable part of the linear motor comprising the carriage, the carriage interface member and the primary part according to an embodiment;
- Figure 2 shows a perspective bottom view of the carriage of Figure 1 according to an embodiment;
- Figure 3 shows perspective views from various orientations of the carriage interface member of Figure 1;
- Figure 4 shows a top view of the movable part of Figure 1 when assembled, and
- Figure 5 shows a cross-sectional view of Figure 4 along A-A.

### Detailed description of several embodiments of the invention

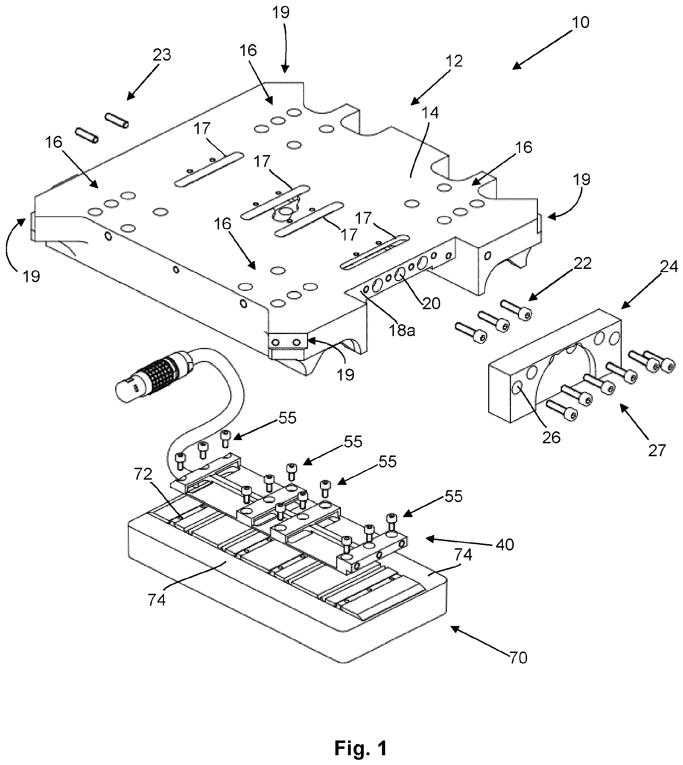

Figure 1 shows a movable part 10 of a linear motor, comprising a carriage 12, a primary part 70 and a carriage interface member 40 for removably connecting the carriage 12 to the primary part 70 of the linear motor. The primary part 70 is adapted to cooperate with a secondary part of the linear motor (not shown) in a conventional manner. The secondary part typically includes a magnetic track comprising permanent magnets fixed between linear guides to enable a magnetic reciprocated action between the primary and secondary parts to move the carriage 12 along the linear guides.

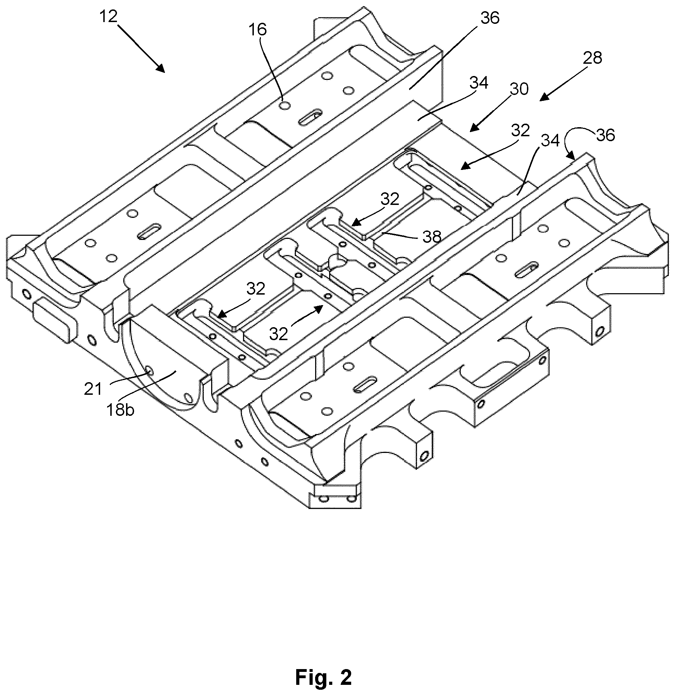

The carriage 12 comprises a top side 14 having a flat surface comprising connecting portions 16 which comprise a plurality of holes extending towards a bottom side 28 of the carriage 12 as shown in Figure 2. These connecting portions 16 are used for fixing the carriage to moving blocks of the linear guides (not shown). Moreover, carriage 12 is configured for fixedly supporting an object to be moved, for example a machine part of a machine tool. This is typically achieved by the means of four lateral mounting surfaces 19 which comprise threaded holes and a shoulder to set precisely the vertical position of the object to be moved.

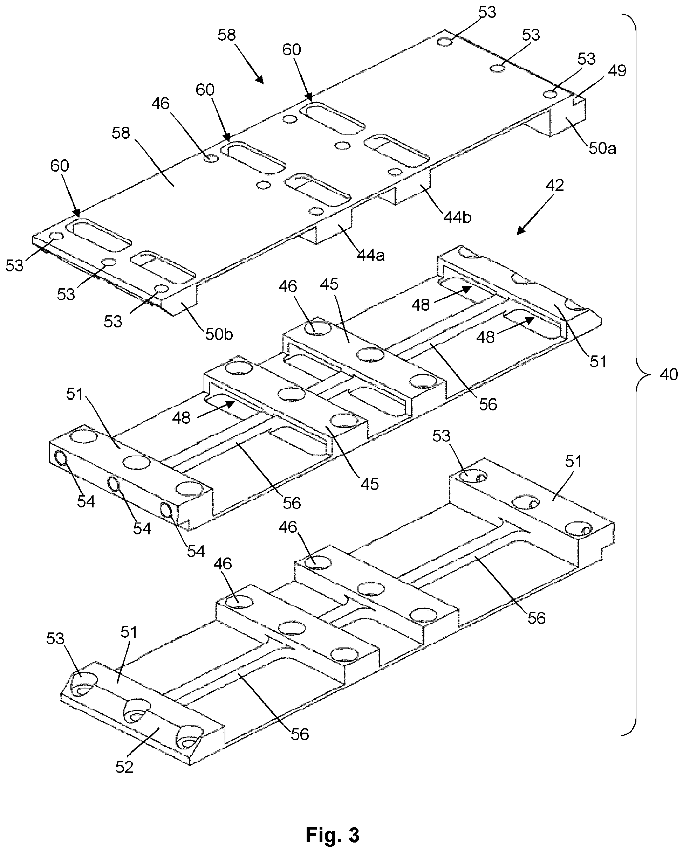

The carriage interface member 40 comprises a top side 42 and a bottom side 58, as shown in Figure 3, which are configured to be connected respectively to the carriage 12 and the primary part 70 of the linear motor. In that respect, the carriage bottom side 28 illustrated in Figure 2 comprises a rectangular-shaped interface member receiving portion 30 comprising four anchoring receiving parts 32 shaped to cooperate with anchoring portions provided on the top side 42 of the carriage interface member 40 as described in detail subsequently. A linear groove 38 extends lengthwise between the anchoring receiving parts 32.

Two facing surfaces 34 extend along two opposite longitudinal sides of the interface member receiving portion 30 to face two lateral upper surfaces 74 of the primary part 70 of the linear motor as shown in Figure 1. The carriage bottom side 28 further comprises two flanking portions 36 adapted to be positioned along two opposite upper side of the primary part 70.

With reference to Figure 3, the top side 42 of the carriage interface member 40 comprises two raised central portions 44a, 44b located near its middle and extending from one to the other of its two parallel opposite longitudinal edges. The top side 42 further comprises two raised edge portions 50a, 50b bordering each of its two opposite lateral edges. Each raised central portion 44a, 44b comprises an upper flat surface 45 provided with primary part fixation holes 46 extending from the flat surface 45 and opening onto the bottom side 58 of the carriage interface member 40. The bottom side 58 of the carriage interface member 40 is a flat surface to be fixed to the top part of the primary part 70.

Each raised edge portion 50a, 50b also comprises an upper flat surface 51 provided with primary part fixation holes 53 extending from the flat surface 51 and opening onto the bottom side 58 of the carriage interface member 40. One raise edge portion 50a further comprises a cantilevered portion provided with carriage fixation threaded holes 54 whose respective axis are parallel to the plane of the carriage top side 14 when the carriage interface member 40 is mounted into the interface member receiving portion 30. The other raised edge portion 50b comprises an upper flat surface 51 and a tapered surface 52 extending from the upper flat surface to the corresponding lateral edge of the carriage interface member 40. The latter comprises on its top side 42 a stiffener 56 in the form of a linear ridge or bulge. The stiffener 56 extends across the middle part of carriage interface member 40 from one to the other of its two opposite lateral sides between the anchoring portions 44a, 44b, 50a, 50b.

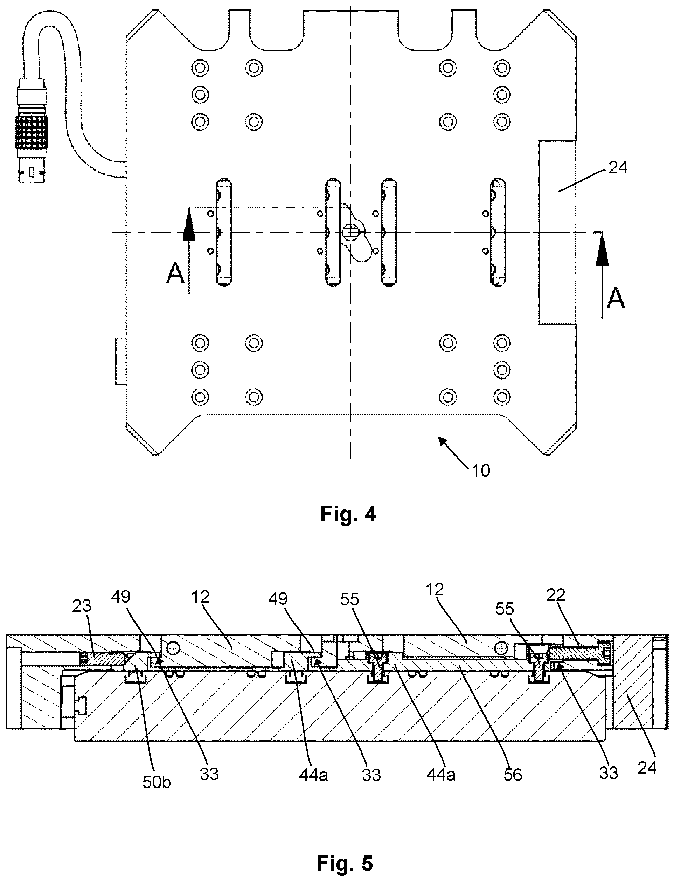

The two raised central portions 44a, 44b and one raised edge portion 50b comprise each two recesses 48 arranged on both sides of the stiffener 56 to create resting surfaces 49. The lower surface of the cantilevered portion of the raised edge portion 50a also plays the function of a resting surface 49. With reference to Figure 5, each of the four anchoring receiving parts 32 of the rectangular-shaped interface member receiving portion 30 comprises a protruding part extending in a direction parallel to the plane of the carriage top side to form a bearing surface 33. The resting surfaces 49 of the carriage interface member anchoring portions 44a, 44b, 50a, 50b are meant to rest on respective bearing surfaces 33.

As shown in Figures 1 and 2, the carriage 12 comprises two opposite lateral side portions 18a, 18b adjoining respective opposite lateral sides of the rectangular-shaped interface member receiving portion 30. Through-holes 20 are provided on lateral side portion 18a. The axes of these through-holes 20 are parallel to the plane of the carriage top side 14 when the carriage interface member 40 is mounted into the interface member receiving portion 30. Threaded holes 21 are provided on lateral side portion 18b. The axes of these holes are parallel to through-holes 20.

The carriage 12 has been designed to be easily manufactured by machining. The slots 17 on the top side 14 of the carriage 12 are the result of machining the bearing surfaces 33 upon which the corresponding resting surfaces 49 rest. The linear groove 38 and the anchoring receiving parts 32 are also manufactured by machining the bottom side 28 of the carriage. Likewise, the elongated openings 60 on the bottom side 58 of the carriage interface member 40 are the result of machining the resting surface 49.

The assembly of the moveable part 10 is realized as follows. The bottom side 58 of the carriage interface member 40 is fixed to the top part of the primary part 70 of the linear motor by means of multiple screws 55 extending through the primary part fixation holes 46, 53 of the carriage interface member 40 with their end portions screwed in respective fixation points 72 provided on the top side of the primary part 70.

The carriage interface member 40 is then fitted inside the rectangular-shaped interface member receiving portion 30 with its anchoring portions 44a, 44b, 50a, 50b and its stiffener 56 positioned inside the corresponding anchoring receiving parts 32 and the linear groove 38 respectively. The interface member receiving portion 30 is then translated relative to the carriage 12 along a direction parallel to the plane of the carriage top side to bring its resting surfaces 49 against the corresponding bearing surfaces 33 of the carriage 12 as shown in Figure 5.

In this configuration, the carriage fixation threaded holes 54 of the cantilevered portion of the raised edge portion 50a are aligned with the through-holes 20 of the lateral side portion 18a of the carriage 12. This cantilevered portion is then fixed to the adjoining lateral side portion 18a by means of screws 22. Headless screws 23 are adjusted inside the threaded holes 21 of the opposite lateral side portion 18b to abut against the tapered surface 52 of the raised edge portion 50a. In this way, a perpendicular force is also created to make sure that resting surfaces 49 are tightly resting on bearing surfaces 33.

The carriage interface member 40 is made of a highly thermal conductive steel exceeding 40 W/mK and preferably around 50 W/mK. The rectangular shape and dimensions of the carriage interface member have been chosen to cover the entire motor contact surface to increase heat transfer thereby improving the thermal behavior of the motor.

In an embodiment, a reinforcing piece 24 may be removably mounted inside a cut-out portion of carriage 12 to increase its stiffness when customary applications generate high mechanical stresses on the carriage. One side of the reinforcing piece 24 is connected to the lateral side portion 18a by means of screws 24, as shown in Figure 1. These screws 24 are mounted inside respective through-holes 26 extending across the thickness of the reinforcing piece.

Various modifications and variations to the described embodiments of the invention are possible within the scope of the invention as defined in the claims. For example, the two opposite raised edge portions of the carriage interface member can be fixed to the lateral side portions of the carriage by other fixations means such as pins press-fitted into through-holes provided on the opposite lateral side portions of the carriage and corresponding holes provided on the two opposite raised edge portions of the carriage interface member.

### Reference list

Movable part 10
Carriage 12
   Top side 14
      Connecting portions 16
      Slots 17
      Lateral side portions 18a, 18b
         Through-holes 20
            Screws 22
         Threaded holes 21
            Headless screws 23
         Reinforcing piece 24
            Through-holes 26
            Screws 27
      Lateral mounting surfaces 19
   Bottom side 28
      Interface member receiving portion 30
      Anchoring receiving parts 32
         Bearing surfaces 33
      Facing surfaces 34
      Flanking portions 36
      Linear groove 38
Carriage interface member 40
   Top side 42
      Anchoring portions
         Raised central portions 44a, 44b
            Upper flat surface 45
            Primary part fixation holes 46
            Recesses 48
               Resting surface 49
         Raised edge portions 50a, 50b
            Upper flat surface 51
            Tapered surface 52
            Primary part fixation holes 53
            Carriage fixation threaded holes 54
         Screws 55
      Stiffener 56
   Bottom side 58
      Elongated opening 60
Primary part 70
   Fixation points 72
   Lateral upper surfaces 74

## Claims

1. Movable part (10) of a linear motor comprising a primary part (70) movable relative to a secondary part, the movable part (10) comprising a carriage (12), the primary part (70) and a carriage interface member (40) for removably connecting the carriage (12) to said primary part (70), the carriage (12) being configured to fixedly support an object to be moved, such as a machine part of a machine tool, wherein the carriage (12) comprises two opposite lateral sides and a bottom side (28) having a carriage interface member receiving portion (30) comprising anchoring receiving parts (32), the carriage interface member (40) being fixedly connected to the primary part (70), **characterized in that** the carriage interface member (40) comprises anchoring portions (44a, 44b, 50a, 50b) mounted on respective anchoring receiving parts (32) of the carriage (12), wherein two opposite edge portions (50a, 50b) of said carriage interface member (40) are aligned and fixedly connected to a portion (18a, 18b) of respective opposite lateral sides of the carriage (12), and wherein the anchoring portions (44a, 44b, 50a, 50b) extend perpendicularly across the carriage interface member (40) from one longitudinal side to the opposite longitudinal side of said carriage interface member (40) in a direction that is also perpendicular to the travel direction of the carriage (12).

2. The movable part (10) according to claim 1, wherein one edge portion (50a) of the carriage interface member (40) comprises carriage fixation threaded holes (54) aligned with through-holes (20) provided on one lateral side portion (18a) of the carriage (12), and wherein said one edge portion (54a) is fixed to said one lateral side portion (18a) by screws (22).

3. The movable part (10) according to the preceding claim, wherein the opposite edge portion (50b) of the carriage interface member (40) comprises a tapered surface (52), and wherein screws (23) are screwed into threaded holes (21) provided on the opposite lateral side portion (18b) of the carriage (12) such that a distal end of said screws (23) abuts against said tapered surface (52) to produce a force on said carriage interface member (40) which is perpendicular to the axis of the threaded holes.

4. The movable part (10) according to any preceding claim, wherein the carriage interface member (40) comprises a top side (42) having raised anchoring portions (44a, 44b, 50a, 50b) and a flat bottom side (58), wherein said anchoring portions comprises raised central portions (44a, 44b) having each a flat surface (45) and primary part fixation holes (46) extending from the flat surface (45) to the bottom side (58), and two raised edge portions (50a, 50b) located on two opposite edges of the carriage interface member (40).

5. The movable part (10) according to the preceding claim, wherein each of the anchoring receiving parts (32) of the interface member receiving portion (30) comprises a bearing surface (33), and wherein each of the anchoring portions (44a, 44b, 50a, 50b) of the carriage interface member (40) comprises a resting surface (49) resting on said respective bearing surfaces (33).

6. The movable part (10) according to the preceding claim, wherein each of at least two anchoring portions comprises a recess (48) extending from one lateral side of the anchoring portion towards an opposite lateral said of said anchoring portion to form said resting surface (49).

7. The movable part (10) according to any preceding claim, wherein one lateral side portion (18a) is flanked by two portions to form a cut-out portion, and wherein a reinforcing piece (24) is removably fixed inside the cut-out portion by means of fixation means (27) extending through the thickness of the reinforcing piece (24), a distal end of the fixation means (27) being connected to said one lateral side portion (18a).

8. The movable part (10) according to any preceding claim, wherein the carriage interface member (40) is in the form of a rectangular plate and comprises a stiffener in the form of a ridge extending in the middle of said rectangular plate along a longitudinal direction between the anchoring portions.

9. A linear motor comprising the movable part according to any preceding claim.

## Patentansprüche

1. Beweglicher Teil (10) eines Linearmotors, umfassend einen Primärteil (70), welcher in Bezug auf einen Sekundärteil beweglich ist, wobei der bewegliche Teil (10) einen Schlitten (12), den Primärteil (70) und ein Schlitten-Schnittstellenelement (40) zur lösbaren Befestigung des Schlittens (12) am besagten Primärteil (70) umfasst, wobei der Schlitten (12) derart konfiguriert ist, um ein zu bewegendes Objekt, wie beispielsweise ein Teil einer Werkzeugmaschine, festzutragen, wobei der Schlitten (12) zwei gegenüberliegende Längsseiten und eine Unterseite (28) umfasst, die einen Aufnahmebereich (30) des Schlitten-Schnittstellenelements mit Verankerungsauf-nahmebereichen (32) aufweist, wobei das Schlitten-Schnittstellenelement (40) fest mit dem Primärteil (70) verbunden ist, **dadurch gekennzeichnet, dass** das Schlitten-Schnittstellenelement (40) Verankerungsabschnitte (44a, 44b, 50a, 50b) umfasst, welche an den jeweiligen Verankerungsaufnahmebereichen (32) des Schlittens (12) montiert sind, worin zwei gegenüberliegende Randabschnitte (50a, 50b) des besagten Schlitten-Schnittstellenelements (40) mit einem Abschnitt (18a, 18b) der jeweiligen gegenüberliegenden Längsseiten des Schlittens (12) ausgerichtet und fest damit verbunden sind, und worin sich die Verankerungsabschnitte (44a, 44b, 50a, 50b) senkrecht durch das Schlitten-Schnittstellenelement (40) von einer Längsseite zur gegenüberliegenden Längsseite des besagten Schlitten-Schnittstellenelements (40) in einer Richtung erstrecken, die ebenfalls senkrecht zur Bewegungsrichtung des Schlittens (12) verläuft.

2. Beweglicher Teil (10) gemäss Anspruch 1, worin ein Randabschnitt (50a) des Schlitten-Schnittstellenelements (40) Schlittenbefestigungs-Gewindebohrungen (54) umfasst, welche mit an einem Seitenabschnitt (18a) des Schlittens (12) ausgebildeten Durchgangsbohrungen (20) ausgerichtet sind, und worin der besagte eine Randabschnitt (50a) am besagten einen Seitenabschnitt (18a) durch Schrauben (22) befestigt ist.

3. Beweglicher Teil (10) gemäss dem vorhergehenden Anspruch, worin der gegenüberliegende Randabschnitt (50b) des Schlitten-Schnittstellenelements (40) eine geneigte Fläche (52) umfasst, und worin Schrauben (23) in Gewindebohrungen (21) eingeschraubt sind, die am gegenüberliegenden Seitenabschnitt (18b) des Schlittens (12) ausgebildet sind, sodass ein distales Ende der besagten Schrauben (23) gegen die besagte geneigte Fläche (52) ansetzt, um eine Kraft auf das besasgte Schlitten-Schnittstellenelement (40) zu erzeugen, welche senkrecht zur Achse der Gewindebohrungen steht.

4. Beweglicher Teil (10) gemäss einem der vorhergehenden Ansprüche, worin das Schlitten-Schnittstellenelement (40) eine Oberseite (42) umfasst, welche erhobene Verankerungsabschnitte (44a, 44b, 50a, 50b) aufweist, und eine flache Unterseite (58) umfasst, worin die besagten Verankerungsabschnitte erhobene Mittelabschnitte (44a, 44b) umfassen, welche jeweils eine ebene Fläche (45) und Primärteil-Befestigungsbohrungen (46) aufweisen, die sich von der ebenen Fläche (45) bis zur Unterseite (58) erstrecken, sowie zwei erhobene Randabschnitte (50a, 50b) umfassen, welche sich an zwei gegenüberliegenden Rändern des Schlitten-Schnittstellenelements (40) befinden.

5. Beweglicher Teil (10) gemäss dem vorhergehenden Anspruch, worin jeder der Verankerungsaufnahmebereiche (32) des Aufnahmebereichs (30) des Schnittstellenelements eine Lagerfläche (33) umfasst, und worin jeder der Verankerungsabschnitte (44a, 44b, 50a, 50b) des Schlitten-Schnittstellenelements (40) eine Auflagefläche (49) umfasst, welche auf den jeweiligen besagten Lagerflächen (33) aufliegt.

6. Beweglicher Teil (10) gemäss dem vorhergehenden Anspruch, worin jeder von mindestens zwei Verankerungsabschnitten eine Aussparung (48) umfasst, welche sich von einer Längsseite des Verankerungsabschnitts zu einer gegenüberliegenden Längsseite des besagten Verankerungsabschnitts erstreckt, um die besagte Auflagefläche (49) zu bilden.

7. Beweglicher Teil (10) gemäss irgendeinem der vorhergehenden Ansprüche, worin ein Seitenabschnitt (18a) von zwei Abschnitten flankiert wird, um einen ausgeschnittenen Teil zu bilden, und worin ein Verstärkungsteil (24) im Inneren des ausgeschnittenen Teils mittels eines Befestigungsmittels (27) lösbar befestigt ist, welches sich durch die Dicke des Verstärkungsteils (24) erstreckt, wobei ein distales Ende der Befestigungsmittel (27) mit dem besagten einen Seitenabschnitt (18a) verbunden ist.

8. Beweglicher Teil (10) gemäss irgendeinem der vorhergehenden Ansprüche, worin das Schlitten-Schnittstellenelement (40) in Form einer rechteckigen Platte vorliegt und eine Verstärkung in Form einer Rippe umfasst, welche sich in der Mitte der besagten rechteckigen Platte entlang einer Längsrichtung zwischen den Verankerungsabschnitten erstreckt.

9. Linearmotor, umfassend den beweglichen Teil gemäss irgendeinem der vorhergehenden Ansprüche.

## Revendications

1. Partie mobile (10) d'un moteur linéaire comprenant une partie primaire (70) mobile par rapport à une partie secondaire, la partie mobile (10) comprenant un chariot (12), la partie primaire (70) et un élément d'interface de chariot (40) pour fixer de manière amovible le chariot (12) à ladite partie primaire (70), le chariot (12) étant configuré pour supporter de manière fixe un objet à déplacer, tel qu'une pièce d'une machine-outil, dans lequel le chariot (12) comprend deux côtés latéraux opposés et un côté inférieur (28) comportant une partie de réception (30) de l'élément d'interface de chariot, la partie de réception comprenant des parties de réception d'ancrage (32), l'élément d'interface de chariot (40) étant relié de manière fixe à la partie primaire (70), **caractérisé en ce que** l'élément d'interface de chariot (40) comprend des parties d'ancrage (44a, 44b, 50a, 50b) montées sur les parties de réception d'ancrage respectives (32) du chariot (12), dans lequel deux parties de bord opposées (50a, 50b) dudit élément d'interface de chariot (40) sont alignées et reliées de manière fixe à une partie (18a, 18b) des côtés latéraux opposés respectifs du chariot (12), et dans lequel les parties d'ancrage (44a, 44b, 50a, 50b) s'étendent perpendiculairement à travers l'élément d'interface de chariot (40) d'un côté longitudinal au côté longitudinal opposé dudit élément d'interface de chariot (40) dans une direction qui est également perpendiculaire à la direction de déplacement du chariot (12).

2. La partie mobile (10) selon la revendication 1, dans laquelle une partie de bord (50a) de l'élément d'interface de chariot (40) comprend des trous filetés de fixation de chariot (54) alignés avec des trous traversants (20) aménagés sur une partie latérale (18a) du chariot (12), et dans laquelle ladite partie de bord (50a) est fixée à ladite partie latérale (18a) par des vis (22).

3. La partie mobile (10) selon la revendication précédente, dans laquelle la partie de bord opposée (50b) de l'élément d'interface de chariot (40) comprend une surface inclinée (52), et dans laquelle des vis (23) sont vissées dans des trous filetés (21) aménagés sur la partie latérale (18b) des côtés opposés du chariot (12) de telle sorte qu'une extrémité distale desdites vis (23) bute contre ladite surface inclinée (52) afin de produire une force sur ledit élément d'interface de chariot (40) qui est perpendiculaire à l'axe des trous filetés.

4. La partie mobile (10) selon l'une quelconque des revendications précédentes, dans laquelle l'élément d'interface de chariot (40) comprend une face supérieure (42) comportant des parties d'ancrage surélevées (44a, 44b, 50a, 50b) et une face inférieure plate (58), dans laquelle lesdites parties d'ancrage comprennent des parties centrales surélevées (44a, 44b) comportant chacune une surface plane (45) et des trous de fixation (46) de la partie primaire s'étendant depuis la surface plane (45) jusqu'à la face inférieure (58), et deux parties de bord surélevées (50a, 50b) situées sur deux bords opposés de l'élément d'interface de chariot (40).

5. La partie mobile (10) selon la revendication précédente, dans laquelle chacune des parties de réception d'ancrage (32) de la partie de réception (30) de l'élément d'interface comprend une surface d'appui (33), et dans laquelle chacune des parties d'ancrage (44a, 44b, 50a, 50b) de l'élément d'interface de chariot (40) comprend une surface de contact (49) reposant sur lesdites surfaces d'appui respectives (33).

6. La partie mobile (10) selon la revendication précédente, dans laquelle chacune d'au moins deux parties d'ancrage comprend un évidement (48) s'étendant depuis un côté latéral de la partie d'ancrage vers un côté latéral opposé de ladite partie d'ancrage pour former ladite surface de contact (49).

7. La partie mobile (10) selon l'une quelconque des revendications précédentes, dans laquelle une partie latérale (18a) est flanquée de deux parties pour former une partie découpée, et dans laquelle une pièce de renfort (24) est fixée de manière amovible à l'intérieur de la partie découpée au moyen d'un moyen de fixation (27) s'étendant à travers l'épaisseur de la pièce de renfort (24), une extrémité distale des moyens de fixation (27) étant connectée à ladite partie latérale (18a).

8. La partie mobile (10) selon l'une quelconque des revendications précédentes, dans laquelle l'élément d'interface de chariot (40) se présente sous la forme d'une plaque rectangulaire et comprend un renfort sous la forme d'une nervure s'étendant au milieu de ladite plaque rectangulaire dans le sens longitudinal entre les parties d'ancrage.

9. Moteur linéaire comprenant la partie mobile selon l'une quelconque des revendications précédentes.
